# EUROPEAN PATENT SPECIFICATION

(11) **EP 2 490 909 B1**
(45) Date of publication and mention of the grant of the patent: **30.08.2017**
(21) Application number: 10775750.2
(22) Date of filing: 19.10.2010
(51) Int. Cl.: B60K 6/10, B60W 20/00, B60K 6/36, B60K 6/365, B60K 6/48, B60K 6/30, B60W 10/10

(54) **APPARATUS AND METHOD FOR TORQUE FILL-IN**
VORRICHTUNG UND VERFAHREN ZUM DREHMOMENTERGÄNZUNG
DISPOSITIF ET PROCÉDÉ POUR COMPLÉMENT DU COUPLE

(30) Priority: 20.10.2009 GB 0918380
(43) Date of publication of application: 29.08.2012
(73) Proprietor: RICARDO UK LIMITED, Shoreham-by-Sea West Sussex BN43 5FG (GB)
(72) Inventor: ATKINS, Andrew Farquhar, West Sussex BN44 3PG (GB); WHEALS, Jonathan Charles, Warwickshire CV8 2SW (GB); SHEPHERD, Simon Timothy David, Warwickshire CV31 1FN (GB); DALBY, Joshua Jonathan, East Sussex BN3 3RQ (GB)
(74) Representative: Clark, Jane Anne
(86) International application number: PCT/EP2010/065730
(87) International publication number: WO 2011/048102

(56) References cited:
- WO-A2-2006/126876
- US-A1- 2002 177 504
- US-B1- 6 365 983

## Description

This invention relates to an apparatus and method for supplying torque.

### Background Of The Invention

The conservation and optimal use of energy is a key consideration in the manufacture and running of modem vehicles and machinery. There is an increasing user demand for efficiency and for obtaining the best possible output at the lowest possible cost to the user. Considerations in this cost/output balance include both financial and environmental factors. In addition, there is a demand for improved power and speed from vehicles and machinery, whilst at the same time a desire to provide a comfortable and user friendly feel. Furthermore, there is a trend for engines, motors and other equipment to become ever more compact and streamlined.

There are many known approaches for dealing with the above discussed balance. For example, as user demand for environmentally friendly vehicles grows and the regulations on carbon emissions become ever stricter, hybrid vehicles are becoming more popular. As will be known to the skilled reader, hybrid vehicles use a combination of two or more different power sources to move a vehicle or otherwise power machinery. In the field of motor vehicles, the most common hybrid is a hybrid electric vehicle (HEV) which combines an internal combustion engine (ICE) with one or more electric motors. Depending on the power demand at any given time, one or both of the ICE and the electric motor will be deployed to provide power to the vehicle's outputs. A chemical energy storage system is provided in conjunction with the electric motor so that, during periods when the electric motor is not being used to power vehicle output, it can instead operate as a generator to create and store charge in the chemical energy storage system for later use. Known chemical energy storage systems can be made up of a single type of chemical cell or can comprise any combination of cells having differing chemical formulations. All such chemical energy storage systems are designated herein as being a chemical "battery".

Problems exist with known hybrid systems since the high cycling frequency of the hybrid battery system charge level caused by, for example, regenerative braking and recovery during a typical vehicle usage scenario and the high power flows associated with these operations accelerate the deterioration of battery health, thereby limiting the system life. Warranty is thus often limited on batteries in conventional hybrid systems. Typically, the chemical battery may have to be changed twice during the lifetime of known hybrid electric vehicles. Furthermore, battery cycling may be limited by protective control systems which control distribution of power supply and/or charging in a hybrid system. An effect of this protective limiting is to impair the CO₂ reduction efficacy of the corresponding hybrid system.

Another known approach for optimising energy supply and its conversion from the stored chemical energy to torque, particularly in ICE powered motor vehicles is the use of turbochargers and superchargers. As will be known to the skilled person, turbochargers recover exhaust energy to drive a compressor and increase inlet charge pressure to an engine. Supercharger devices use engine delivered torque to drive compressors to also boost the inlet charge pressure. However, both these devices have associated disadvantages in practice. Turbochargers, as passive devices, are only operable when there is sufficient exhaust mass flow to drive the boosting system. Superchargers, by contrast, are active devices since they are generally crank driven and consequently do not suffer from such operational limitations as turbochargers do. However superchargers do introduce parasitic losses of engine power, thereby reducing their overall efficacy in terms of reducing fuel consumption.

One aspect of user comfort and feel which known motor vehicle applications target is the "torque-interrupt" sensation caused by a gearshift event on an automated manual transmission vehicle. Whilst this transmission type is very efficient, this feeling of torque-interrupt during gearshifts compromises shift comfort and driveability for the user. According to known approaches, electric motors can be used to fill in torque during a shift interrupt of an automated manual transmission, to improve smoothness of the drive for the user. However, additional energy supply is required within the vehicle in order to power such electric motors and, furthermore, there is inevitable energy loss during the energy conversion stage between electric and kinetic energy. Dual clutch and automatic transmissions limit the torque-interrupt during a gearshift, however these transmission types are more expensive than, and/or inherently less efficient than, the automated manual transmission due to associated losses when supplying the drive system with energy.

As discussed above, in order to optimally balance cost and output in a vehicle or machine it is desirable to harness as much of the available energy as possible and to prevent energy merely being dissipated as, for example, heat energy.

Flywheels are known for the storage of energy in the form of kinetic energy, for example for use in vehicles. It is known to use a flywheel to store the energy which would otherwise be converted to heat in a vehicle's braking system when the vehicle decelerates, this stored energy then being available for use to accelerate the vehicle when desired. However, a problem with known flywheel implementation remains that of how to charge the flywheel initially and at points of low energy therein. It is possible to use an electrical motor flywheel charge system. However, it will be appreciated that this is not ideal since it introduces an additional energy demand on the electrical energy storage system within a vehicle, whilst at the same time not providing a reduction in waste energy dissipation from the vehicle.

A vehicle driveline comprising a combustion engine, a transmission and a flywheel coupled to the driveline, is known from for instance WO-A.2006/126876.

Hence there is an ongoing requirement for apparatus and methods that optimise use of energy in vehicles and other machinery whilst at the same time not compromising on user-important factors such as comfort, cost effectiveness and environmental friendliness.

The invention is set out in the claims.

Because an apparatus for supplying torque fill-in to, and receiving torque from, a vehicle driveline is provided, said apparatus including a flywheel and associated coupling, torque fill-in can be supplied in an energy efficient and highly responsive manner. That is, the flywheel can store energy therein for future use when a torque supply will be required from the flywheel. The flywheel can be used to transmit and/or receive torque in conjunction with the vehicle driveline's primary torque supply, such that enhanced torque is provided as compared to conventional systems using a single torque supply.

The flywheel is rechargeable and, in particular, can be recharged using energy recovered from operation of the vehicle, such as exhaust gas energy or energy recovered during regenerative braking or load levelling in a vehicle. By using the flywheel to provide torque to a vehicle driveline, a self contained energy recycling system can thus be provided, wherein the vehicle can be used to recharge the flywheel and the flywheel can, at other times, be used to supply torque to the vehicle driveline, dependent on instantaneous vehicle requirements.

Because suitable coupling means including a power translator such as a variator and/or a clutch can be provided, enhanced control of the torque supplied by the flywheel is achieved. Therefore an accurate means of supplying torque, which optimally harnesses energy and does not use energy unnecessarily, is provided.

By controlling the torque supply to a mechanical system from a flywheel and another torque supply in parallel, the operating requirements of the vehicle can be suitably met. In particular, by using the flywheel to supply torque during a gear shift event in a vehicle, at which time torque supply from the ICE is reduced, enhanced user comfort is provided and the feeling of "torque interrupt" that can be incurred in conventional vehicle systems is avoided. After the gear shift event is completed, the engine can operate to recharge the flywheel. Therefore a self-contained, self-perpetuating torque supply system is provided.

### Description of Figures

Embodiments according to the present application will now be described with reference to the Figures of which:
Figure 1 shows a known flywheel arrangement;
Figure 2 shows a possible configuration for providing exhaust gas energy to a flywheel;
Figure 3 shows a relationship between boost and engine load for a conventional turbocharger device;
Figure 4 shows a possible layout for dual-mode operation of a flywheel battery in parallel with a chemical battery;
Figure 5 shows an exemplary control flow for the arrangement of Figure 4;
Figure 6a shows energy flow in the arrangement of Figure 4 during load levelling or regenerative braking;
Figure 6b shows energy flow in the arrangement of Figure 4 during power assist from an electric machine to an ICE;
Figure 6c shows energy flow in the arrangement of Figure 4 during plug-in charge;
Figure 6d shows energy flow in the arrangement of Figure 4 during slow charge maintenance;
Figure 6e shows energy flow in the arrangement of Figure 4 during low power flywheel power maintenance and high power electric machine operation;
Figure 7a shows the relationship between the vehicle speed and chemical battery state of charge for a chemical battery used in isolation in a hybrid vehicle;
Figure 7b shows the relationship between the vehicle speed and chemical battery state of charge in the arrangement of Figure 4;
Figure 8a shows a possible engine configuration for flywheel torque fill-in;
Figure 8b shows another, similar arrangement for flywheel torque fill-in;
Figure 8c shows a further, similar arrangement for flywheel torque fill-in;
Figure 8d shows a possible control scheme for flywheel torque fill-in
Figure 9a shows a possible arrangement of an auxiliary flywheel device coupled to an ICE;
Figure 9b shows an alternative arrangement of an auxiliary flywheel device coupled to an ICE, using a split path IVT layout;
Figure 10a shows an arrangement wherein a flywheel device is coupled to an ICE upstream of the main vehicle clutch and transmission;
Figure 10b shows an arrangement wherein a flywheel device is coupled to an ICE at a transmission input;
Figure 10c shows an arrangement wherein a flywheel is coupled to an ICE at its transmission output; and
Figure 10d shows an arrangement wherein a flywheel is coupled to a rear axle system.

### Overview

In overview, an apparatus, method and control scheme are provided for using a flywheel to provide torque to a mechanical system, in particular to the driveline of a vehicle. The flywheel may be the sole torque supply for the mechanical system or, preferably, the flywheel may be provided in parallel with another torque supply such as an internal combustion engine (ICE).

The flywheel is coupled to the mechanical system to which it transmits torque in any suitable configuration. When used in parallel with an ICE, the flywheel may be mechanically coupled to one of a number of different points in the torque supply line, between the ICE and the mechanical system, dependent on system operating requirements. Furthermore, the torque supplied by the flywheel to the mechanical system can be controlled and manipulated using any suitable coupling means or power tranlsator, for example including a variator and/or a clutch.

The flywheel may be rechargeable using energy recovered from the mechanical system to which it supplies torque and/or may be charged up initially or during operation by any suitable means including exhaust gas energy, a chemical battery, an electric motor and an ICE.

A control scheme is provided to optimally control the supply of torque from the flywheel, in addition or as an alternative to conventional torque supply means such as an ICE, to the mechanical system. The control scheme can take several factors into consideration including the instantaneous charge of the flywheel, the torque requirements of the mechanical system and the instantaneous torque supply capacity of the ICE or other torque supply means which the flywheel is operating in conjunction with. For example, a flywheel can be used to supply torque to a vehicle driveline during a gear shift event during vehicle operation, at which time there would otherwise be a torque interrupt sensation for the user if torque supply was coming from the vehicle engine alone.

Thus, a flexible, intelligent and efficient apparatus and method for supplying, receiving and controlling torque is provided. The apparatus can be implemented in conventional vehicle, engine or machine configurations in order to optimise use of energy therein and provide enhanced user comfort particularly in a vehicle by stabilising the torque supply thereto.

### Detailed Description

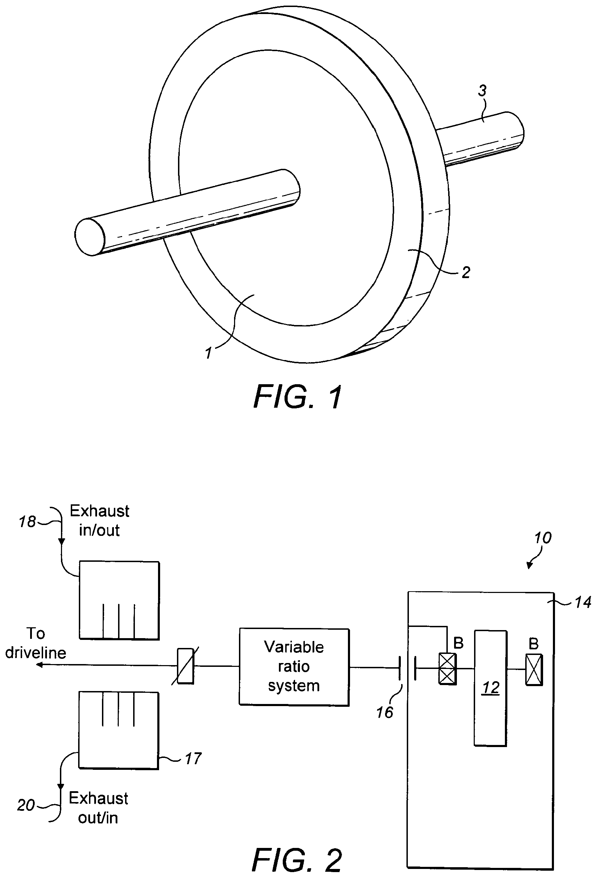

Figure 1 shows a typical existing flywheel arrangement. A substantially circular central metallic support section 1 can be axially mounted on a central support such as a shaft 3. At least one composite ring 2 is mounted on the central support section 1. In the flywheel shown in Figure 1, the composite ring 2 is filament wound from carbon fibre. As will be known to the skilled person, and as discussed above, a flywheel device such as the one shown in Figure 1 can be used as a mechanical battery to store kinetic energy for use, for example, within a motor vehicle.

### Exhaust -Driven Flywheel

Figure 2 shows a possible arrangement for providing energy to a flywheel in a vehicle for storage. The system 10 includes a flywheel 12 arranged in a vacuum 14, in order to optimise operation of the flywheel 10 by removing the friction that would otherwise be caused by air resistance. Outside the vacuum 14, in connection with the flywheel 12, is a clutch 16. The clutch 16 employed may be a simple clutch of any suitable type, even a magnetic clutch. In order to provide energy to and initially drive the flywheel 12, and/or to top up charge in the flywheel battery system, an input 18 is provided to the flywheel 12 via the clutch 16. The input channels exhaust gas energy from the combustion engine of the vehicle in which the flywheel system 10 is provided to the flywheel 12, and enables that exhaust gas energy to be stored in the flywheel 12. The arrangement also includes a suitable output 20 for the exhaust gas, such that supply of exhaust gas energy to the flywheel 12 can be manipulated and controlled.

It will be appreciated that the majority of the exhaust gas created in a vehicle is conventionally released to the atmosphere. This wastes the energy within the exhaust gas by releasing it from the vehicle rather than reusing it. Therefore the vehicle must work to make more energy available therewithin, hence leading to further exhaust gas emissions from the vehicle, thereby creating potential environmental problems. In contrast, the present embodiments harness the energy with exhaust gas and enable it to be stored for future use. Any suitable device for recovering the exhaust energy and directing it to the flywheel 12 may be provided. For example, a Tesla turbine device (not shown) may be employed to use the exhaust gas as a motive agent and recover exhaust energy therefrom.

As will be known to the skilled person, a Tesla turbine, or disc turbine, is comprised of two or more disc-shaped elements fastened onto a shaft and axially spaced from one another along the shaft by washers or other suitable means. In use, gas or fluid flow in a Tesla turbine is radial, travelling in a circular or spiral path. In the present embodiments, the flow of exhaust gas to the clutch 16 and flywheel 12 may be controlled by varying the axial separation of the discs of a Tesla turbine, in order to increase or decrease the volume of gas being transmitted therethrough and input to the clutch 16, per unit time.

In the arrangement shown in Figure 2, there is no Tesla turbine. The exhaust gas is instead directed to the clutch 16 and flywheel 12 via a variable geometry turbo charger (VGT) (17). VGT's and other turbocharger devices are widely used to recover exhaust gas from vehicles and use it to boost pressure at the inlet of an engine. However, due to the nature of the direct drive of a turbocharger, it cannot harness or store the energy from the exhaust gas provided to it. According to the present embodiments, as an alternative or in addition to performing its normal functionality of providing boosted air to the engine, a VGT may be advantageously employed to utilize excess exhaust gas energy via the flywheel 12 such that the energy therein may be stored for future use.

As shown in Figure 2, the clutch 16 is provided between the flywheel 12 and a variable ratio system 22. As discussed further below, a variable ratio system may include a variator device such as a continuously variable transmission (CVT) or infinitely variable transmission (IVT) or a comparative electric machine arrangement. The variable ratio system 22 in Figure 2 leads to the driveline of the vehicle, such that the flywheel device 12 is mechanically coupled to the internal combustion engine (ICE) of the vehicle to provide a mechanical hybrid drive system. However the flywheel 12 could alternatively or additionally be used for other purposes including direct drive, charging other battery types, and/or powering vehicle outputs other than the driveline, whilst still being arranged to be charged by the exhaust gas stream of the vehicle.

The clutch should be capable of engaging to synchronise the flywheel (12) input and the turbine element in the arrangement as shown in Figure 2. It therefore should engage in a slipping state and therefore dissipate a small amount of energy.

A lightweight low-inertia dry-type single plate or cone type-clutch could be used as a straight-forward solution. More compact solutions include an electromechanical particle clutch which is used on a/c compressor and supercharger drives but typically has a fairly low speed range or a wrap spring clutch device which, being a one way device, will only provide torque to the flywheel preventing any drag losses from the turbine when the engine is not "on-boost".

When synchronised by the variable ratio system (22), the turbine will spin at flywheel speed and therefore variable inlet geometry could be used to optimise the turbine efficiency based on operating conditions including flywheel speed, exhaust mass flow rate, and exhaust manifold pressure.

And so a mechanism is provided for recovering combustion engine exhaust gas energy and storing it for future use. The flywheel 12 according to the present embodiments does not require any additional energy source such as an electric motor in order to initiate charging or top it up, but instead continual auxiliary charging of the flywheel system is provided by making use of existing exhaust gas energy which would otherwise be wasted in a conventional vehicle system. Unlike turbochargers, the flywheel performance is not limited by turbo lag. Furthermore, the energy in the flywheel 12 does not need to be used immediately but can be stored for future use in a variety of applications within a vehicle, as will be understood further from the descriptions below. Moreover, because the mechanism as illustrated in Figure 2 uses exhaust gas flow in which there is kinetic energy and provides it for storage in a flywheel also as kinetic energy, losses due to conversion between energy types are reduced.

### Flywheel-Assisted Turbocharging

According to an embodiment of the above-described aspect, the flywheel 12 can be placed in the wastegate loop of a turbocharger. As will be familiar to the skilled person, a turbocharger is a passive device placed in the exhaust gas stream in a vehicle or engine, the purpose of which is to direct exhaust gas energy to a compressor to increase this pressure therein. However if there is too much mass flow through the turbine itself this creates a back pressure which increases the engine's exhaust manifold pressure above its optimum level, thereby making the engine less efficient. In order to avoid this, the turbo charger has a wastegate in order to release excess gas therefrom, hence helping to optimise both the engine boost pressure and the exhaust manifold pressure at different system operating points.

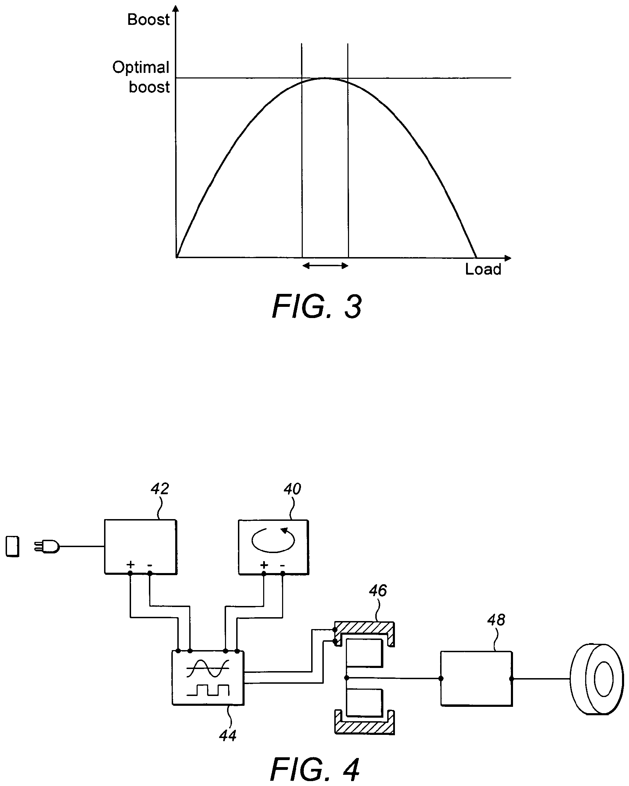

In conventional arrangements, the energy in the exhaust gas that is released from a turbocharger wastegate is not harnessed but instead is lost as the exhaust gas is released from the vehicle. According to the present aspect, this waste of exhaust gas energy is addressed. The energy within the excess exhaust gas emitted from the wastegate of the turbocharger is directed to the flywheel to provide an input thereto. Either immediately or at a later time, the flywheel 12 can then be used to assist in driving the compressor of the turbo charger. Therefore, by using the turbocharger and flywheel 12 in combination, exhaust gas energy is intelligently captured and harnessed in order to assist running of the turbocharger. This enables more efficient operation of the turbocharger, as can be understood from Figure 3.

Looking at Figure 3, the boost-load relationship for a conventional turbocharger is illustrated. It can be seen that the turbocharger produces an optimal ideal boost for the associated internal combustion engine only for a small range of engine loads. However using a flywheel 12 to drive the compressor of a turbocharger, in combination with the turbocharger turbine, acts to optimise boost over a greater range of loads and hence flatten the curve shown in Figure 3. Thus improved turbocharger efficiency is achieved.

### Flywheel-Assisted Supercharging

As well as being operable for use with a turbocharger, a flywheel according to the present embodiments may be used in order to drive a supercharger device for a vehicle. As discussed briefly above, known supercharger devices operate by using engine power in order to drive the compressor of the supercharger and boost charge pressure in a vehicle. This direct use of engine power causes parasitic losses, hence compromising the potential efficiency of the vehicle in operation.

According to the present aspect it has been recognised that a flywheel device can be used to drive a charge boosting device such as a supercharger in order to boost engine charge pressure without directly taking power from the engine, thus avoiding parasitic losses that are typically associated with superchargers.

The flywheel can be charged using exhaust gas energy, as discussed above. Alternatively, energy may be recovered from the driveline of a vehicle, for example during regenerative braking or engine load levelling, and stored in an auxiliary flywheel device for use in driving a supercharger. Energy may be recovered from the power train through any suitable mechanical linkage such as a variator, also discussed above.

In operation, a supercharger is coupled to the driveline of the vehicle. The flywheel acts as a torque supply to the supercharger, therefore enabling energy stored in the flywheel to be supplied indirectly to the driveline via the ICE. The mechanical linkage used between the flywheel and the supercharger may include a clutch as discussed above in relation to the exhaust driven flywheel aspect. As an alternative, an overdrive clutch could be used, whereby turbine energy is used directly in the conventional sense to drive the compressor when it is up to speed and flywheel energy is only used when the turbine is idling (i.e. low engine speed). This requires an overrun clutch which only drives in one direction, for example a wrap spring clutch. This is particularly effective for electro-magnetic flywheel configurations in which speeds do not need to match - the flywheel is then charged from the turbine via an electrical path when the turbine is over-boosting at high engine speeds. The flywheel drives the compressor at low engine speeds also via an electrical path.

Because, according to the present aspect, the flywheel is charged using driveline energy and/or exhaust gas, energy that would otherwise be wasted in a conventional system is instead harnessed. By harnessing the otherwise-waste energy, the overall performance of the vehicle is improved. In particular, performance benefits are provided with respect to both fuel consumption and vehicle emissions.

The auxiliary flywheel device according to this aspect can be used as the sole energy source for the supercharger or can be used as an add-on to an existing supercharger energy source. For example, it can provide power boosting to a supercharger at low engine speeds, at which point it is not preferable to use direct engine power for supercharging purposes. Therefore, because the flywheel is operable to enhance power supply to a supercharger, the supercharger can provide an ideal inlet pressure and mass flow into an ICE regardless of the operating engine speed of the vehicle, and in sympathy with any mass flow being provided by a turbo system (if present) at that time. Put another way, the flywheel driven supercharger can provide optimal charge boost at any point of the engine operating map for a vehicle. This provides particular advantages for driving manoeuvres such as pull away, which benefit from an immediate short-term surge of energy when engine exhaust mass flow is low and power is otherwise low, especially in a highly boosted engine.

Another advantage of the flywheel driven supercharger is that it allows for downsizing of an engine since the engine power density during low exhaust mass flow events such as pull away, described above, is improved. The reduction in size reduces friction and pumping losses, thereby improving its efficiency. It is anticipated that, by actively controlling the mass flow into the cylinder of an engine to optimum in all conditions, the flywheel driven supercharger could result in up to a 30% reduction in fuel consumption for an engine even without downsizing. Downsizing the engine will therefore enhance this potential fuel consumption advantage and also satisfy the growing consumer trend for achieving maximum performance from as small, compact and low cost an ICE as possible.

The above described advantages of the flywheel driven supercharger are particularly pronounced for diesel engines for which there is typically more gaseous mass in the chamber to be compressed and expanded than would be the case for gasoline engines. As the skilled person will appreciate, the ideal inlet pressure varies between engine and vehicle types, and can be derived, for example from the design load map for such a vehicle.

### Dual-Mode Battery

Figure 4 shows a possible layout for another flywheel use according to a further aspect of the present application. A configuration is shown for using mechanical flywheel energy storage in parallel with a conventional plug-in chemical battery system. The mechanical 40 battery comprising the flywheel can be used, for example, to handle regenerative braking energy recovery as an alternative to this function being performed using the chemical battery 42. As discussed above, regenerative braking and recovery during a typical vehicle usage scenario tends to require high power and frequency cycling of the battery system charge level for a hybrid vehicle or machine. Such high frequency cycling can have significant negative effects on chemical batteries, deteriorating their health and limiting the life of the overall system.

According to an exemplary embodiment of the present aspect, a mechanical flywheel battery 40 operates in parallel with a chemical battery 42, feeding into the power electronics 44 of an electric machine 46 which, in turn, is arranged to provide power to the hybrid driveline 48 of a vehicle.

The arrangement as shown in Figure 4 is not limited to using the flywheel as the main battery for regenerative breaking. The flywheel battery 40 may advantageously be used as the main battery for any rapid or short-term energy supply and/or recovery during vehicle use, whereas the chemical battery 42 is more suited to lower charge rates, i.e. slower, longer-term energy supply and recovery. As will be appreciated from the additional Figures discussed below, the parallel chemical 42 and mechanical 40 batteries according to the present aspect should be arranged and operated according to the same considerations as any other battery arrangement. That is, one must consider the available energy, power and lifetime of the two batteries in isolation and in combination. It should be noted that whilst Fig. 4 shows an embodiment wherein two batteries are arranged in parallel, they could also be arranged in series with the mechanical flywheel battery 40 positioned between the chemical battery 42 and the transmission of an engine.

By using a mechanical flywheel battery 40 in conjunction with a chemical battery 42, it is possible to reduce the overall costs of the battery supply for an electric machine since a smaller chemical battery will be required for use in conjunction with a mechanical battery for any given power requirement, as compared to a chemical battery being used on its own, without mechanical battery support. Alternatively, the lifetime costs of the electrical supply system could be reduced by increasing the life of an existing battery by reducing the cycling frequency and/or the peak power demanded of, or supplied to, the chemical battery.

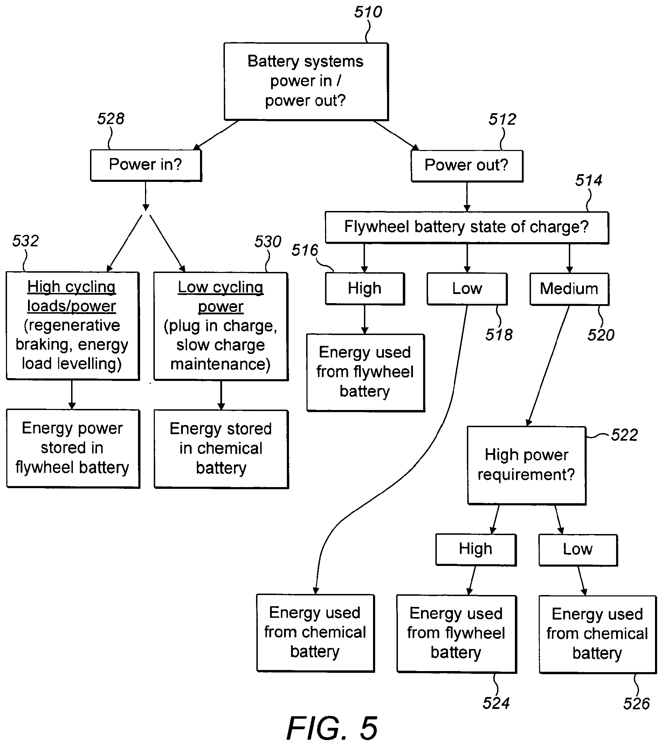

Looking at Figure 5, an exemplary control scheme can be understood. At a first step 510 it is considered whether, at a particular moment in time, power is going into or out of a combined chemical and mechanical battery system, such as the one illustrated in Figure 4. If, according to the vehicle user requirements and operating conditions at that time, power is to go out 512 of the battery system in order to provide power to the electric machine 46, the flywheel battery state of charge is then considered at step 514. If the flywheel battery state of charge is found to be high 516, energy will be used from the flywheel battery 40 to supply power to the electric machine 46. If, on the other hand, the flywheel battery state of charge is low 518, energy from the chemical battery 42 will instead be used. If, as often will be the case, the flywheel battery state of charge is medium at a time at which power output is required from the battery system, it will then be considered at step 522 whether the power requirement at that time is high or low. If the power requirement is high, the energy to meet that requirement will be taken from the flywheel battery 524. However if the power requirement is low, such that a significant recharging cycle would not be required thereafter, the energy to meet the power requirement will be taken from the chemical battery 526.

Going back to control step 510, if it is decided at step 528 that power is to go into the battery system, the next consideration is whether this power-in will happen at low cycling power 530, for example during plug-in charging or otherwise slow charge maintenance, or whether the power-in is to happen at high cycling loads or power, for example during regenerative braking or engine load levelling. For low cycling power-in, the energy will be stored in the chemical battery 42. However for high cycling loads or power the energy will instead be stored in the mechanical flywheel battery 40. In this manner, a control system is provided that optimises the energy storage and recovery cycling characteristics of each of the battery types whilst at the same time ensuring that each battery is sufficiently charged to deal with dynamically changing engine and vehicle requirements.

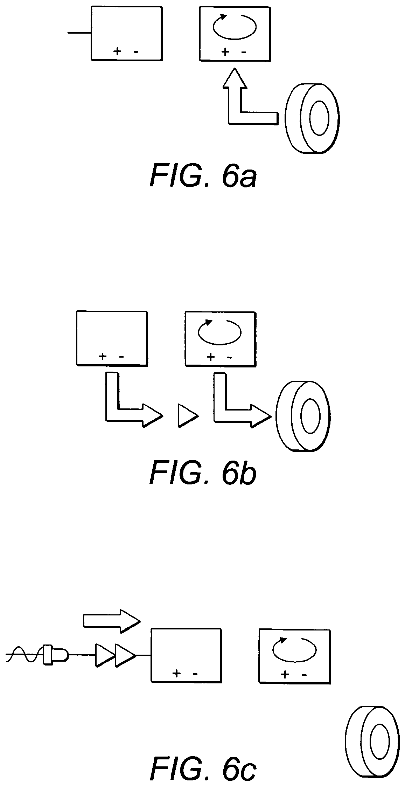

Figures 6a to 6e further illustrate the above-exemplified control logic. Fig. 6a illustrates energy flow during load levelling or regenerative braking, during which times energy is recovered and reused over short time intervals. As shown in Figure 6a, the energy that was previously present in the vehicle as kinetic energy is recovered through the driveline into the flywheel battery, in order to avoid a cycling frequency of chemical battery charge and also, advantageously, to avoid conversion between energy types which can lead to energy dissipation.

In Figure 6b the electric machine is being used to boost power supply from an ICE in a hybrid vehicle. Both the chemical battery 42 and the flywheel battery 40 are used to supply energy to the electric machine in order to meet the vehicle's output demand at that time. Thus, it will be understood that the two battery types can be operated either together or separately, depending on the energy requirements and other control considerations at a given point in time.

In Figure 6c the chemical battery is being charged via plug-in means. The chemical battery stores long-term charge from plug-in mains electricity, for subsequent use.

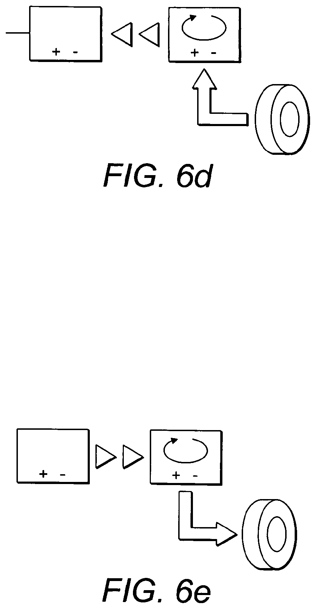

In Figure 6d it can be seen that energy may be provided from the mechanical battery 40 to the chemical battery 42. Figure 6d illustrates slow charge maintenance wherein high power energy recovery from the vehicle wheels and driveline is directed to the flywheel battery 40 and thereafter low power charge from recovered flywheel energy is supplied to the chemical battery 42 for long term storage in chemical form. In this way, the currents flowing into the chemical battery 42 are minimised which, in turn, minimises the power loss to heat in the chemical battery 42. The reduction in power loss in the chemical batteries improves the system efficiency and reduces the impact of the deleterious thermal ageing effects on the cell structure, as discussed further below.

Finally, Figure 6e illustrates energy flow for high power working of the electric machine 46. The chemical battery 42, which is used for long term storage of energy in chemical form, charges the flywheel 40 to enable it to provide energy to high power applications for short periods of time. As described above, the efficiency of energy supply for high power applications is greater from the flywheel battery than from the chemical battery, such that the flywheel battery is preferably used in isolation to provide energy to the electric machine when high power output is required from it.

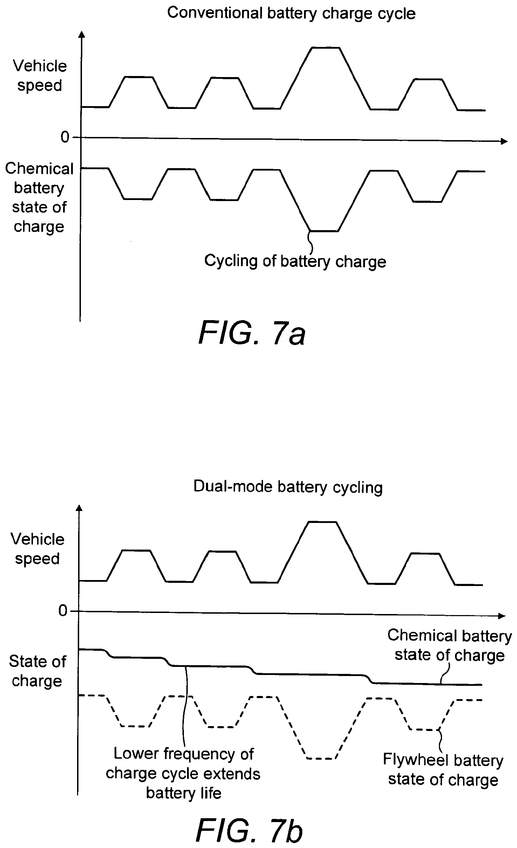

Figures 7a and 7b show a typical battery charge cycle for a chemical battery, as compared to vehicle speed, for a conventional chemical battery working in isolation and for a chemical battery working in dual mode with a flywheel battery, respectively. It can be seen from these Figures that by using energy from a flywheel battery during periods of, for example, fast acceleration or deceleration, and thereby avoiding high power flows and high cycling frequency of charge in a chemical battery, greater stability of charge in the chemical battery is achieved.

By way of further example, according to conventional vehicles using chemical batteries alone in a configuration such as that shown in Figure 4, an energy "round trip" (wheels to battery to wheels) during regenerative braking via an electric motor/generator to a chemical battery would be expected to be between 50% and 63% efficient. In contrast, the same regenerative braking routine performed using a mechanical flywheel battery as opposed to a chemical battery as the energy storage source is expected to be up to around 84% efficient. Therefore dual-mode configurations such as that shown in Figure 4 enable the long term benefits of a chemical battery to be maintained and at the same time introduce new and advantageous efficiency effects via use of a flywheel mechanical battery in parallel. The mechanical flywheel energy storage device is inherently suited to short term energy storage and has no fundamental limits on the power it can deliver or receive. Therefore the present aspect utilises the strength of the mechanical system by preferably using it for short term energy storage only. Although it is anticipated that the flywheel battery might assist the chemical battery for long term energy storage purposes in exceptional circumstances.

In a further advantage, the use of a flywheel in dual mode with a chemical battery avoids high power flows in and out of the chemical battery, thereby preventing excessive temperature elevation in the chemical battery. As the skilled person will appreciate, elevation of temperature in a chemical battery over a period of time contributes to its deterioration. Furthermore, elevating the internal temperature of the chemical battery will lead to increased system inefficiency as Ohmic losses in subcomponents rise with increased Impedance, commensurate with the elevation in battery temperature.

The overall mechanical battery/chemical battery dual-mode arrangement has an extended expected lifetime as compared to conventional chemical-only battery arrangements. Dual mode mechanical/chemical battery operation as described herein is not limited to use in conventional hybrid engines or to electric vehicles. Instead the principle may be applied more globally to other vehicle machinery and equipment, including lifts and cranes.

### Flywheel Torque Fill-in System

According to a yet further aspect, a flywheel according to the present embodiments may be used to "fill-in" output driveline torque on a vehicle during a "torque-interrupt" caused by a gearshift event on an automated manual transmission vehicles. As will be understood from the description below, the fill-in layout and associated control methods herein address the "torque-interrupt" sensation, which can be a problem for some users, by using flywheel energy to drive or brake transmission output during a gearshift event to at least reduce or potentially eliminate the torque-interrupt feel for the user.

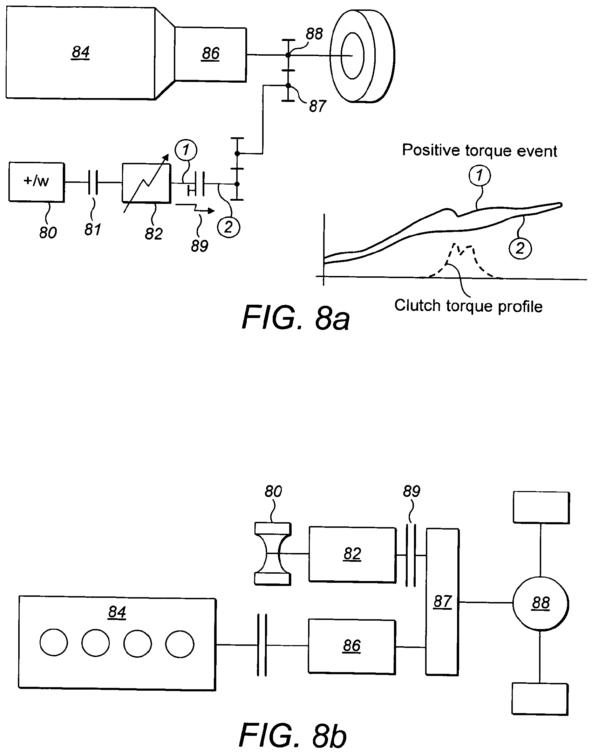

Figure 8a shows a possible layout for using stored flywheel energy to provide torque fill-in. A flywheel motor 80 is connected to a variator 82 by a suitable isolating coupling 81. In turn, the variator 82 is mechanically coupled to the output of the internal combustion engine 84 downstream of its transmission 86, so that both the flywheel 80 and the engine 84 can provide energy to the final drive 88 of the vehicle.

The power provided by or taken in by a flywheel is proportional to the angular acceleration of the flywheel, i.e. the rate of change of flywheel speed, assuming the flywheel has a constant inertia. Therefore the rate of change of torque delivered by the flywheel 80, via the variator 82, is inversely proportional to the angular acceleration of the flywheel and thus the rate of change of ratio across the variator 82. However it is anticipated that controlling ratio across the variator 82 alone would not provide sufficient control resolution for effective flywheel torque fill-in as required according to the present aspect.

As will be known by the skilled reader, most variators are designed to control the speed ratio there-across and are not inherently designed for torque control. For variatiors in which speed only is controlled, using a variator in isolation to control torque over short durations gives rise to potential problems due to internal slippage of variator elements and, possible delays in the reaction of the variator's regulation mechanism. Therefore, in order to provide sufficient control of the torque delivered to or taken from the driveline by the flywheel 80 according to the present aspect, regulating coupling means 89 are provided between the variator 82 and its final mechanical coupling point 87 with the driveline 88.

This use of regulating coupling 89, including a clutch, appropriately positioned within the ratio train as illustrated in Figure 8a, enables enhanced torque control that would not be possible by using a variator 82 alone. The configuration as shown in Figure 8a can use variator 82 speed control to maintain a consistent but limited slip across the clutch in order to minimise slip dissipation but ensure consistent torque direction between the flywheel 80 and the final driveline 88. This enables torque control resolution in the range, for example, 0 to 100 Nm but in a compact and cost effective package. The torque control device including the variator 82 and regulating coupling 89 according to the present aspect provides a fast response, in the region of less than 100 milliseconds, thus enabling immediate reaction of the flywheel 80 in providing torque fill-in to the driveline 88 when required, particularly during a gearshift event. The arrangement as shown in Figure 8a minimises energy dissipation and thus ensures that as much of the stored energy in the flywheel 80 ultimately is converted to effective torque fill-in in accordance with the vehicle's needs over time.

In operation, the clutch comprised in the regulating coupling 89 can direct and control both brake torque and accelerating torque from the flywheel 80. That is, if the flywheel side element has a speed which is below the speed of the driveline side element then brake torque will result from the clutch action. Conversely, if the flywheel side element has a speed that is above the driveline side element then accelerating torque will result from the clutch action.

It will be appreciated that the magnitude of the slip across the clutch will increase the extent to which energy is dissipated in the clutch. However, according to the present embodiments, minimal energy dissipation is suffered in the clutch device during its operation, providing slip limitation in conjunction with variator control. This allows for downsizing of the clutch unit within the regulating coupling 89 as compared to a typical launch clutch on a separate ratio transmission vehicle. The clutch used in the regulating coupling 89 according to the present embodiments may be of any suitable type including a magnetic clutch, a passively cooled dry clutch unit, a passively cooled sealed wet clutch unit with mechanical actuation device, wet clutch plates with internal passive pumping device, or a multi plate clutch.

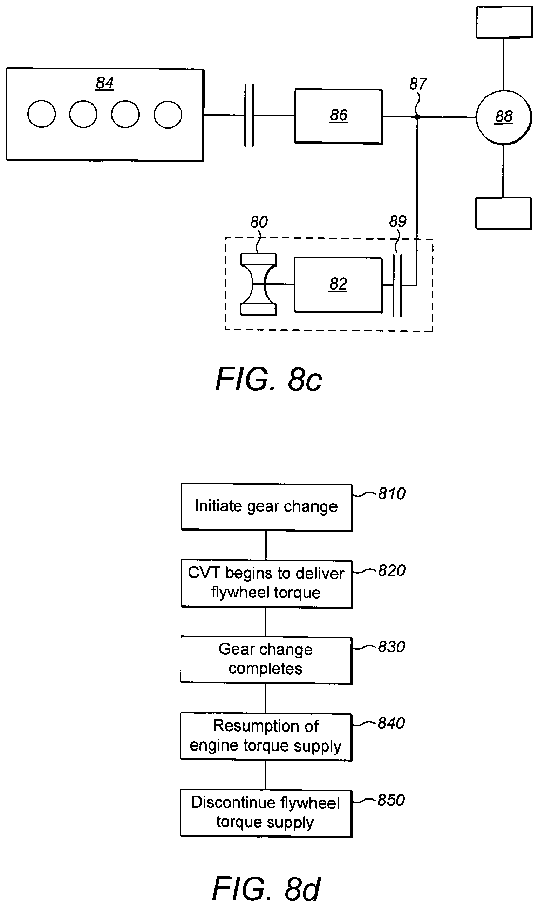

The control strategy for flywheel torque fill-in can be understood with respect to the arrangement of Figure 8a and further with respect to Figures 8b and 8c, which also illustrate suitable configurations according to this aspect. The control logic includes consideration of whether the engine power is on or off during a given gearshift manoeuvre and also on whether the shift is an upshift or a downshift.

For a "power-on" upshift, the flywheel 80 is required to provide accelerating torque to the driveline 88. This enables the torque change at the vehicle wheels during the gearshift to be spread over the complete shift without compromising the shift time or vehicle speed. Thus advantages provided are over conventional power shifting transmissions which must implement torque change at the wheels during a first torque phase before speed can be changed, thus leading to an interrupt sensation for the user.

By way of illustrative example, Figure 8d shows a possible control flow for a flywheel torque fill-in system according to the present aspect. The flywheel used may be of any suitable capacity. For example, the flywheel motor 80 may have a capacity of 400KJ and the variator 82 used may be a CVT having 120KW capability. In such an arrangement, the flywheel could supply 100KW down the driveline, over a period of four seconds. However, as the skilled person will appreciate, a typical gearshift only take around a quarter of a second. Therefore not all the energy in the flywheel needs to be dissipated during any given gearshift and/or there can be overlap between flywheel torque supply and engine torque supply at the beginning and/or end of the gearshift.

As shown in Figure 8d, in an exemplary control flow the user first initiates the gear change at step 810, typically using the clutch pedal or other in-vehicle clutch control means. At step 820 the CVT then comes on stream to deliver power, derived from the flywheel, to the driveline during the gear change. Once this power delivery is in place, at step 820 the gear change occurs in the engine. Once the gear change is complete, at step 840 the engine resumes responsibility for power delivery and, either at the same time or thereafter, at step 850 the power delivery from the flywheel and CVT is discontinued. At steps 840 and 850, during the transition of power delivery from the flywheel back to the engine, the engine can overrun in order to top up the charge on the flywheel in preparation for subsequent use.

The considerations and control flow are similar for a power-on downshift. wherein a conventional power shifting transmission must implement torque change at the wheels in a torque phase after speed has been changed. However, by using a flywheel 80 to contribute to braking torque during a power-on downshift, the torque change at the wheels during the shift can be spread over the complete shift without compromising shift time or speed. Furthermore, the braking energy is collected in the flywheel for later return as per the shiftup scenario discussed hereabove.

During a power-off downshift or upshift using a configuration as shown in Figures 8a to 8c, torque change at the vehicle wheels can be spread over the complete coast down, thus ensuring smooth coasting behaviour with no shift feel. Advantageously, because the fill-in flywheel device can recover kinetic energy, dependant on the drive mode of the vehicle, the main engine transmission can await positive torque before proceeding with further operations.

Thus the flywheel configuration and control method according to the present aspect provide a way of controlling torque delivered during a gearshift event in order to provide improved shift comfort for the user over the gearshift period. The flywheel fill-in system provides an efficient means of energy storage and recovery since energy between the flywheel and the driveline remains in the kinetic form, hence preventing energy dissipation that is often associated with energy conversion stages in vehicles and machinery.

Because, according to the present aspect, it is not necessary to convert between energy types, efficiency is increased. Therefore more energy is available in the overall system such that potentially no additional energy sources are required for torque fill-in to be provided. Because the flywheel is arranged both to provide energy to the driveline when required and to recover energy from the driveline at other points during a vehicle usage cycle, it makes use of energy that is already present in a vehicle and thus does not require an energy source in order to provide its torque fill-in function. This provides a significant advantage over, for example, electric motor fill-in systems that require an additional energy source, or at least, an energy conversion stage, in order to provide torque to the driveline.

It is anticipated that an electrically-controlled automated manual transmission having a sufficiently-sized auxiliary flywheel device will realise both torque fill-in and the additional energy efficiency benefits associated with hybrid arrangements as discussed herein. This will enable around a 20% fuel consumption reduction as compared to using a dual clutch transmission for a similar vehicle and engine operating conditions. Furthermore, using an automated manual transmission in combination with flywheel torque fill-in is no more expensive than using a dual clutch transmission.

A flywheel and associated variator and coupling, if required, can be retrofitted to an existing automated manual transmission, thereby improving its efficiency and providing improved user comfort during gearshift events in a straightforward and relatively low cost manner. The package impact of retrofitting a flywheel as described herein for torque fill-in purposes in existing systems is very low since no major redesign of the system is required for doing so. Therefore the present aspect has potential for use in existing vehicles as well as in future vehicle designs.

### Variator and Device Configuration Options

It will be appreciated that the choice of variator type and the device layout or configuration options for the above-described flywheel aspects are not limited to those as specifically described or illustrated herein. Instead, any suitable device choice and layout may be implemented according to the requirements to be met for a particular vehicle, engine, machine or other apparatus.

The function of a variator device is to match the speed of a flywheel to the speed at the mechanical coupling point at which a flywheel is coupled to the output of an ICE or other output means. In effect, the variator is a power translator. That is, power in the flywheel embodiments discussed above is proportional to torque multiplied by angular speed. The function of the variator or other power translator used is to translate how torque and low speed at one side thereof to low torque and high speed at the other side of the power translator.

Both the choice of mechanical coupling point and the variator design impact on the functionality of a flywheel assisted system according to the aspects described herein. The variator options for those aspects in which a variator is utilised include a belt type continuous variably transmission (CVT), a traction type CVT, a mechanical split path infinitely variable transmission (IVT), an electrical split path IVT, a hydrostatic CVT/IVT and one or more electrical motors. Indeed, the system could even be air-driven.

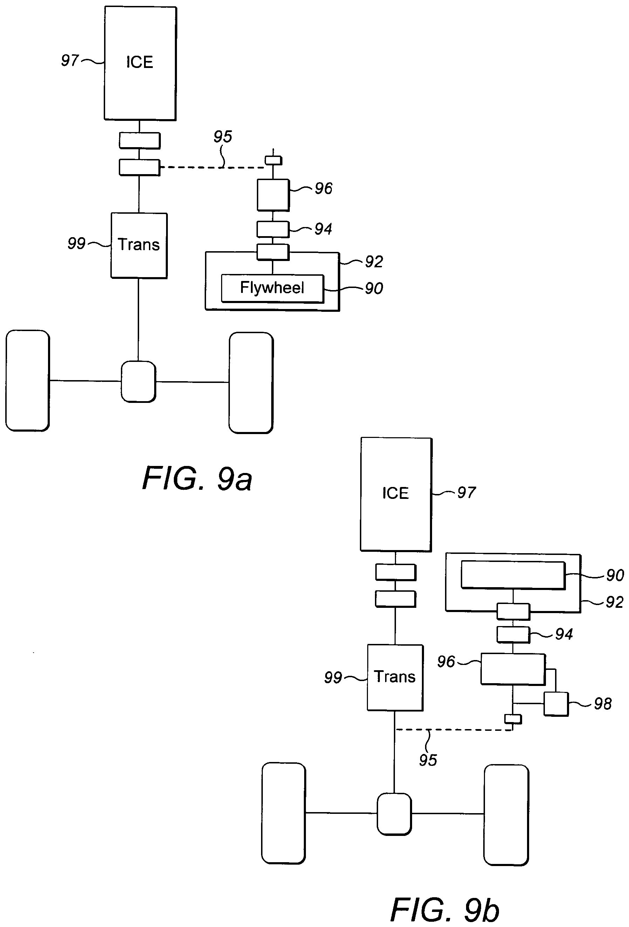

Figure 9a shows a possible flywheel and variator layout that could be used, for example, for torque fill-in purposes. The flywheel 90 is arranged in a vacuum 92. The flywheel 90 connects to a coupling clutch 94 by any suitable coupling means. The coupling clutch 94 provides a connection between the flywheel 90 and a variator device 96. The variator device 96 is, in turn, mechanically coupled to the transmission input of a vehicle, between the internal combustion engine 97 and the transmission 99.

Figure 9b shows an alternative layout comprising a split path IVT. Again, a flywheel 90 is provided preferably in a vacuum 92 and is in connection with a coupling clutch 94, which in turn connects to a variator. The variator device used in this arrangement includes epicyclic stages 96 and an inline traction variator 98. The inclusion of an IVT variator system improves the potential functionality of the flywheel assisted engine, providing increased recovery range at low speed and also enabling launch boost.

It will be seen that in Figure 9b the variator device is mechanically coupled to the output of the ICE 97 but, unlike the arrangement shown in Figure 9a, is coupled at the output of the transmission 99. As mentioned above, this choice of mechanical coupling point can have an impact on the functionality and associated advantages of a flywheel-assisted system.

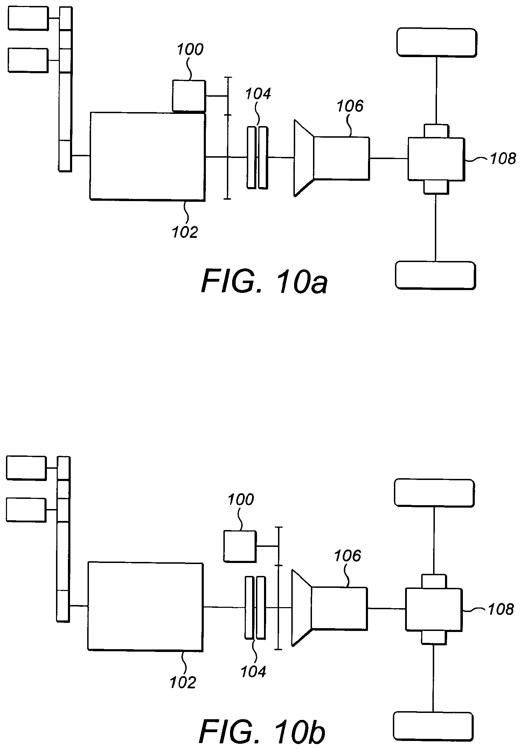

Figures 10a to 10b further illustrate potential coupling configuration options for flywheel assist according to the presently described aspects.

In Figure 10a an auxiliary flywheel device 100 is coupled to the ICE 102, upstream of the main vehicle clutch 104 and transmissions 106. This coupling configuration provides an advantage in that a relatively narrow ratio range is needed across the variator device between the ICE 102 and the flywheel 100 in order to match flywheel speed to the speed at its coupling point with the ICE 102. That is, because the engine rotates at a higher speed than the wheels, the ratio difference between the flywheel and engine is less than that between the flywheel and the wheels. Also, the large, powerful gears needed for the transition between the flywheel and the ICE are already present in the transmission, but are not present lower downstream.

The arrangement in Figure 10a furthermore reduces variator torque by utilising the torque advantage of the transmission. However, because the flywheel is coupled upstream of the clutch 104, the clutch 104 must be closed to recover and reuse energy from the flywheel 100 in the vehicle driveline 108. Therefore energy recovery from the flywheel 100 is interruptible by gearshifts. Furthermore, power shift transmission is required in this arrangement in order to enable continuous drive and regenerative braking using the flywheel device 100 for mechanical energy storage.

Figure 10b shows an alternative coupling configuration similar to that shown in Figure 9a, wherein the flywheel 100 is coupled to the transmission input, between the clutch 104 and the transmission 106. As with the arrangement in Figure 10a, the configuration in 10b provides an improved useable range due to the compatible transmission ratios between the ICE 102 and the flywheel 100. And it also enables reduction of variator torque. However, decoupling is still required during gearshifts in order for energy recovery and/or reuse from the flywheel 100 during gearshift manoeuvres.

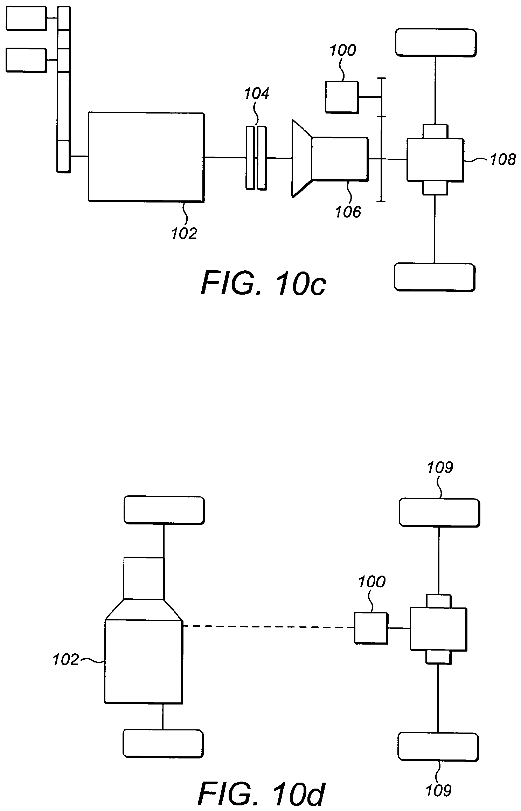

Figure 10c illustrates another possible coupling configuration wherein the flywheel 100 is coupled at the transmission output. This arrangement is advantageous since the energy recovery from the flywheel 100 is not interrupted by gearshifts. Furthermore, there is potential for a flywheel only mode, wherein the flywheel 100 is the sole energy source and energy does not come from the ICE 102, which is possible as long as the main clutch 104 is open. However the configuration in Figure 10c has a reduced overall range of operation as compared to the configurations of Figures 10a and 10b and it also requires increased coupling torque at the variator output.

Figure 10d shows a rear axle system wherein the flywheel 100 is provided between the engine 102 and the rear wheels 109 of a vehicle. As with the arrangement as shown in Figure 10c, this configuration is advantageous since energy recovery from the flywheel is not interrupted by gearshifts and there is potential for a flywheel only mode as long as the main clutch is open. Furthermore the flywheel 100 may be used for four wheel drive assist or for part time four wheel drive functionality. Thus the flywheel 100 could assist in diversifying the suitability of a vehicle for different driving conditions. However, as with the configuration shown in Figure 10c, the configuration in Figure 10d has a reduced overall operating range and requires increased coupling torque at the variator output as compared to the configurations shown in Figures 10a and 10b.

A further use of a flywheel in a suitable configuration as discussed above is in launch support. Dependent on the vehicle type and the engine load map, the flywheel may be the sole torque supply for launch or may be used in conjunction with the engine torque supply. For example, for a relatively small vehicle in a situation such as in a queue of traffic, nudging forward at regular intervals, the flywheel could be sufficient to supply torque for launch of the vehicle for each nudge forward. Alternatively, for a larger vehicle or for longer or higher-speed movements of a smaller vehicle, the flywheel could be used in conjunction with part of the engine capability, for example using two engine cylinders out of the four available. An appropriate control strategy can be put in place so that the optimum combination of flywheel and engine torque supply is used at any given time taking into account vehicle factors and potentially also environmental factors such as emissions restrictions in particular areas.

Another factor in the suitability of the particular variator or coupling configuration according to the presently described aspects is the speed of the flywheel itself during operation. The kinetic energy stored within a flywheel at any given time is directly proportional to the square of its speed (E *α ω*²). Therefore if for example half the stored energy is extracted from a high-speed flywheel this will cause a smaller percentage speed drop in the high-speed flywheel as compared to taking out half the energy from a low-speed flywheel. It follows that a faster flywheel helps to reduce the required ratio range of the variator device being used for coupling that flywheel to an ICE.

### Variants

It will be appreciated that the flywheel aspects as described herein are not mutually exclusive but can be implemented in any suitable combination in a vehicle, machine or other apparatus. For example, an engine layout may include a relatively small flywheel to be used for any or all of: driving a supercharger, charging a chemical battery, and providing an auxiliary energy supply or recovery in addition to that which is provided by the main power source during vehicle start or stop events. The same engine configuration could also include a relatively large flywheel for use in direct and/or hybrid drive of the vehicle wheels.

For any of the above described aspects it is possible for the flywheel to be configured such that, on switch off of the vehicle or the equipment, the flywheel is run down and in doing so charges a chemical or other long term battery storage means.

Dependant on the particular requirements to be met or restrictions to adhere to, a flywheel may be included in an engine or machine during manufacture or retro-fitted to an existing engine or machine after manufacture, in a number of different configurations.

Thus a plurality of aspects are provided herein, in each of which a flywheel is implemented in an engine, vehicle, machine or apparatus in order to advantageously harness the available energy therein and use it to improve overall performance and output. There are no additional energy sources required to run or charge the flywheels, but instead it is recognised according to the present aspects that energy which is dissipated in conventional systems can instead be usefully captured, stored and reused using a suitable flywheel arrangement. Furthermore, the flywheel arrangements herein may be suitably manipulated and controlled in order to meet changing operating conditions and user requirements over time in a straightforward and energy efficient manner.

The present aspects recognise that energy can most often be recovered in a vehicle or machine in kinetic form and thus, by using a flywheel to store energy also in kinetic form, reduce or avoid energy dissipation due to energy conversion stages. The flywheel can store energy in kinetic form over an extended period of time and, furthermore, can be used to supply energy in kinetic or other forms to other energy storage devices according to conditions overtime, for example, during engine switch off.

The flywheel aspects described herein provide substantial advantages over known arrangements by enabling enhanced efficiency and performance in a user friendly, cost effective, compact and environmentally friendly manner. They can be implemented in any suitable vehicle, engine, machine or apparatus in order to improve its output performance and meet user requirements in a manner not previously possible using prior art arrangements.

## Claims

1. An apparatus for supplying torque to and receiving torque from a vehicle driveline (88), said apparatus including a flywheel (80) arranged in a vacuum, the flywheel (80) being connected with a coupling (81) to a variator (82) arranged to transmit torque to and from said flywheel (80), the variator (82) being arranged to be mechanically coupled to the output of a primary torque supply (84) downstream of its transmission (86), wherein the apparatus is arranged, in use, to supply and/or to receive torque in parallel with the primary torque supply (84) to and/or from a common vehicle driveline (88).

2. An apparatus as claimed in claim 1 wherein said primary torque supply includes an Internal Combustion Engine (ICE) and/or an electric motor.

3. An apparatus as claimed in claim 1 further comprising a clutch (81, 89), wherein said clutch (81, 89) is arranged, in use, to enhance the torque control provided by said variator (82) between the flywheel (80) and the vehicle driveline (88) to or from which torque is being transmitted or received.

4. An apparatus as claimed in any of claims 1 to 3 wherein said flywheel (80) is rechargeable using energy recovered from operation of the vehicle

5. An apparatus as claimed in claim 4 wherein said flywheel (80) is rechargeable using any of: exhaust gas energy, a chemical battery, an electric motor, an internal combustion engine (ICE) and energy recovered directly from the vehicle driveline.

6. An apparatus as claimed in any of claims 1 to 5 further comprising a controller for controlling torque transmission to and from said vehicle driveline (88).

7. A method of supplying torque fill-in to a vehicle driveline (88), said method including providing an apparatus as claimed in any of claims 1 to 6, charging the flywheel (80) in preparation for torque supply , and transmitting torque from the flywheel to the vehicle driveline during vehicle operation, to replace or enhance torque transmission from the primary torque supply (84).

8. A method as claimed in claim 7 further comprising recharging said flywheel (80) using energy recovered from operation of the vehicle.

9. A method as claimed in claim 7 or claim 8 comprising transmitting torque from said flywheel (80) to the vehicle driveline (88) if the instantaneous torque requirement for the vehicle driveline exceeds a threshold level.

10. A method as claimed in any of claims 7 to 9 comprising transmitting torque from said flywheel (80) to the vehicle driveline (88) during a period of reduced torque transmission from the primary torque supply (84).

11. A method as claimed in any of claims 7 to 10 further comprising transmitting torque from the vehicle driveline (88) to the flywheel (80) and/or to the primary torque supply (84).

12. A method as claimed in any of claims 7 to 11 wherein said mechanical primary torque supply (84) is an internal combustion engine and wherein said method comprises using the flywheel (80) as the sole torque supply to the vehicle driveline (88) during a portion of a vehicle gear shift event.

13. A method as claimed in claim 12 further comprising, after completion of the vehicle gear shift event, replacing the flywheel (80) with the internal combustion engine (84) as the sole torque supply to the vehicle driveline (88).

14. A method as claimed in claim 12 or claim 13 further comprising, after completion of the gear shift, using the internal combustion engine (84) to recharge the flywheel (80)

## Patentansprüche

1. Vorrichtung zum Zuführen von Drehmoment zu und zum Erhalten von Drehmoment von einem Triebstrang (88) eines Fahrzeugs, wobei die genannte Vorrichtung ein in einem Vakuum angeordnetes Schwungrad (80) beinhaltet, wobei das Schwungrad (80) mit einer Kupplung (81) an einem Variator (82) angeschlossen ist, der zum Übertragen von Drehmoment auf das und von dem genannte(n) Schwungrad (80) angeordnet ist, wobei der Variator (82) so angeordnet ist, dass er mechanisch mit dem Abtrieb einer primären Drehmomentzufuhr (84), der ihrem Getriebe (86) nachgeschaltet ist, gekoppelt zu werden, wobei die Vorrichtung im Gebrauch zum Zuführen und/oder zum Erhalten von Drehmoment parallel zur primären Drehmomentzufuhr (84) zu und/oder von einem gemeinsamen Fahrzeugantriebsstrang (88) angeordnet ist.

2. Vorrichtung nach Anspruch 1, wobei die genannte primäre Drehmomentzufuhr eine Brennkraftmaschine (ICE) und/oder einen Elektromotor beinhaltet.

3. Vorrichtung nach Anspruch 1, die ferner eine Kupplung (81, 89) aufweist, wobei die genannte Kupplung (81, 89) im Gebrauch zum Verbessern der von dem genannten Variator (82) zwischen dem Schwungrad (80) und dem Triebstrang (88) des Fahrzeugs, zu bzw. von welchem Drehmoment übertragen oder erhalten wird, angeordnet ist.

4. Vorrichtung nach einem der Ansprüche 1 bis 3, wobei das genannte Schwungrad (80) unter Verwendung von aus dem Betrieb des Fahrzeugs zurückgewonnener Energie wiederaufladbar ist.

5. Vorrichtung nach Anspruch 4, wobei das genannte Schwungrad (80) unter Verwendung von einem der Folgenden wiederaufladbar ist: Abgasenergie, einer chemischen Batterie, einem Elektromotor, einer Verbrennungskraftmaschine (ICE) und direkt aus dem Triebstrang des Fahrzeugs zurückgewonnener Energie.

6. Vorrichtung nach einem der Ansprüche 1 bis 5, die ferner eine Steuereinheit zum Steuern der Drehmomentübertragung zu und von dem genannten Triebstrang (88) des Fahrzeugs aufweist.

7. Verfahren zum Zuführen einer Drehmomentergänzung zu einem Triebstrang (88) eines Fahrzeugs, wobei das genannte Verfahren das Bereitstellen einer Vorrichtung nach einem der Ansprüche 1 bis 6, Aufladen des Schwungrads (80) in Vorbereitung auf die Drehmomentzufuhr und Übertragen von Drehmoment vom Schwungrad auf den Triebstrang des Fahrzeugs während des Fahrzeugbetriebs beinhaltet, um die Drehmomentübertragung von der primären Drehmomentzufuhr (84) zu ersetzen oder zu verbessern.

8. Verfahren nach Anspruch 7, das ferner das Wiederaufladen des genannten Schwungrads (80) unter Verwendung von aus dem Betrieb des Fahrzeugs zurückgewonnener Energie aufweist.

9. Verfahren nach Anspruch 7 oder Anspruch 8, das das Übertragen von Drehmoment von dem genannten Schwungrad (80) auf den Triebstrang (88) des Fahrzeugs, wenn der augenblickliche Drehmomentbedarf für den Triebstrang des Fahrzeugs einen Schwellenwert übersteigt, aufweist.

10. Verfahren nach einem der Ansprüche 7 bis 9, das das Übertragen von Drehmoment von dem genannten Schwungrad (80) auf den Triebstrang (88) des Fahrzeugs während einer Zeitspanne reduzierter Drehmomentübertragung von der primären Drehmomentzufuhr (84) aufweist.

11. Verfahren nach einem der Ansprüche 7 bis 10, das ferner das Übertragen von Drehmoment vom Triebstrang (88) des Fahrzeugs auf das Schwungrad (80) und/oder auf die primäre Drehmomentzufuhr (84) aufweist.

12. Verfahren nach einem der Ansprüche 7 bis 11, wobei die genannte mechanische primäre Drehmomentzufuhr (84) eine Verbrennungskraftmaschine ist und wobei das genannte Verfahren das Verwenden des Schwungrads (80) als einzige Drehmomentzufuhr zum Triebstrang (88) des Fahrzeugs während eines Teils eines Fahrzeuggangschaltereignisses umfasst.

13. Verfahren nach Anspruch 12, das ferner das Ersetzen, nach Abschluss des Fahrzeuggangschaltereignisses, des Schwungrads (80) durch die Verbrennungskraftmaschine (84) als die einzige Drehmomentzufuhr zum Triebstrang (88) aufweist.

14. Verfahren nach Anspruch 12 oder Anspruch 13, das ferner das Verwenden, nach Abschluss der Gangumschaltung, der Verbrennungskraftmaschine (84) zum Wiederaufladen des Schwungrads (80) aufweist.

## Revendications

1. Appareil de délivrance de couple depuis une transmission de véhicule (88) et de réception de couple de celle-ci, ledit appareil comportant un volant (80) agencé dans un vide, le volant (80) étant connecté à un couplage (81) réalisé avec un variateur (82) agencé pour transmettre un couple audit volant (80) et recevoir un couple de celui-ci, le variateur (82) étant agencé pour être couplé mécaniquement à la sortie d'un organe de délivrance de couple primaire (84) situé en aval de sa transmission (86), dans lequel l'appareil est agencé, en service, pour fournir et/ou recevoir un couple en parallèle avec l'organe de délivrance de couple primaire (84) vers et/ou depuis une transmission de véhicule commune (88).

2. Appareil selon la revendication 1 dans lequel ledit organe de délivrance de couple primaire comporte un moteur à combustion interne (ICE) et/ou un moteur électrique.

3. Appareil selon la revendication 1 comprenant en outre un embrayage (81, 89), dans lequel ledit embrayage (81, 89) est agencé, en service, pour rehausser la commande de couple assurée par ledit variateur (82) entre le volant (80) et la transmission de véhicule (88) à laquelle ou depuis laquelle le couple est transmis ou reçu.

4. Appareil selon l'une quelconque des revendications 1 à 3 dans lequel ledit volant (80) est rechargeable en utilisant l'énergie récupérée du fonctionnement du véhicule.

5. Appareil selon la revendication 4 dans lequel ledit volant (80) est rechargeable en utilisant n'importe lequel : d'une énergie de gaz d'échappement, d'une batterie chimique, d'un moteur électrique, d'un moteur à combustion interne (ICE) et d'une énergie récupérée directement de la transmission de véhicule.

6. Appareil selon l'une quelconque des revendications 1 à 5 comprenant en outre un contrôleur pour commander la transmission de couple à et depuis ladite transmission de véhicule (88).

7. Procédé de délivrance d'un couple d'appoint à une transmission de véhicule (88), ledit procédé comportant la fourniture d'un appareil selon l'une quelconque des revendications 1 à 6, le chargement du volant (80) en préparation à la délivrance de couple, et la transmission du couple du volant à la transmission de véhicule durant le fonctionnement du véhicule, pour remplacer ou rehausser la transmission de couple depuis l'organe de délivrance de couple primaire (84).

8. Procédé selon la revendication 7 comprenant en outre la recharge dudit volant (80) avec l'énergie récupérée du fonctionnement du véhicule.

9. Procédé selon la revendication 7 ou la revendication 8 comprenant la transmission du couple dudit volant (80) à la transmission de véhicule (88) si le besoin de couple instantané de la transmission de véhicule dépasse un niveau limite.

10. Procédé selon l'une quelconque des revendications 7 à 9 comprenant la transmission de couple dudit volant (80) à la transmission de véhicule (88) durant une période de transmission à couple réduit depuis l'organe de délivrance de couple primaire (84).

11. Procédé selon l'une quelconque des revendications 7 à 10 comprenant en outre la transmission d'un couple de la transmission de véhicule (88) au volant (80) et/ou à l'organe de délivrance de couple primaire (84).

12. Procédé selon l'une quelconque des revendications 7 à 11 dans lequel ledit organe de délivrance de couple primaire mécanique (84) est un moteur à combustion interne et ledit procédé comprenant l'utilisation du volant (80) comme seul organe de délivrance de couple à la transmission de véhicule (88) durant une partie d'un événement de changement de vitesse de véhicule.

13. Procédé selon la revendication 12 comprenant en outre, au terme de l'événement de changement de vitesse de véhicule, le remplacement du volant (80) par le moteur à combustion interne (84) comme seul organe de délivrance de couple à la transmission de véhicule (88).

14. Procédé selon la revendication 12 ou la revendication 13 comprenant en outre, au terme du changement de vitesse, l'utilisation du moteur à combustion interne (84) pour recharger le volant (80).
